(19) **Europäisches Patentamt** / **European Patent Office** / **Office européen des brevets**

(11) **EP 4 230 438 A1**

(12) # EUROPEAN PATENT APPLICATION

(43) Date of publication:
**23.08.2023 Bulletin 2023/34**

(21) Application number: **23152832.4**

(22) Date of filing: **23.01.2023**

(51) International Patent Classification (IPC):
**B60C 1/00** *(2006.01)* **C08L 15/00** *(2006.01)*

(52) Cooperative Patent Classification (CPC):
(C-Sets available)
**C08C 19/02; B60C 1/0016** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.02.2022 JP 2022025869**

(71) Applicant: **Sumitomo Rubber Industries, Ltd.**
**Kobe-shi, Hyogo 651-0072 (JP)**

(72) Inventor: **MATSUMOTO, Takuya**
**Kobe-shi, 651-0072 (JP)**

(74) Representative: **TBK**
**Bavariaring 4-6**
**80336 München (DE)**

(54) **TIRE**

(57)     Provided is a tire having excellent wet grip performance during high-speed driving. The present invention relates to a tire which includes a tread portion including a rubber composition, the rubber composition containing a polymer containing an ethylene unit and a resin component containing a cyclic structure, the tire satisfying the following relationship (1): $A/T \geq 0.80$, wherein A represents the acetone-extractable content (%) of the rubber composition, and T represents the thickness (mm) of the tread portion measured on the equator in a cross section taken in the radial direction of the tire.

FIG.2

EP 4 230 438 A1

**(Cont. next page)**

(52) Cooperative Patent Classification (CPC): (Cont.)

C-Sets
**C08F 236/10, C08F 4/48;**
**C08L 15/00, C08L 7/00, C08L 9/00, C08L 91/00,**
**C08L 25/16, C08L 91/06, C08K 3/04, C08K 3/36,**
**C08K 5/548, C08K 3/22, C08K 5/18, C08K 5/09,**
**C08K 3/06, C08K 5/31, C08K 5/47;**
**C08L 15/00, C08L 7/00, C08L 91/00, C08L 25/16,**
**C08L 9/00, C08L 91/06, C08K 3/04, C08K 3/36,**
**C08K 5/548, C08K 3/22, C08K 5/18, C08K 5/09,**
**C08K 3/06, C08K 5/31, C08K 5/47;**
**C08L 15/00, C08L 7/00, C08L 91/00, C08L 45/02,**
**C08L 9/00, C08L 91/06, C08K 3/04, C08K 3/36,**
**C08K 5/548, C08K 3/22, C08K 5/18, C08K 5/09,**
**C08K 3/06, C08K 5/31, C08K 5/47;**
**C08L 15/00, C08L 7/00, C08L 91/00, C08L 61/06,**
**C08L 9/00, C08L 91/06, C08K 3/04, C08K 3/36,**
**C08K 5/548, C08K 3/22, C08K 5/18, C08K 5/09,**
**C08K 3/06, C08K 5/31, C08K 5/47;**
C08F 236/06, C08F 212/08

**Description**

TECHNICAL FIELD

The present invention relates to a tire.

BACKGROUND ART

Techniques for improving wet grip performance of tires have been proposed, such as incorporating silica into a tread rubber or increasing the amount of low softening point resins, liquid polymers, etc.

SUMMARY OF INVENTION

TECHNICAL PROBLEM

Meanwhile, due to the recent improvements in highway infrastructure and vehicle performance, driving at high speeds is not uncommon. Under this circumstance, it is desirable to improve wet grip performance, particularly during high-speed driving. The present invention aims to solve the above problem and provide a tire having excellent wet grip performance during high-speed driving.

SOLUTION TO PROBLEM

The present invention relates to a tire, including a tread portion including a rubber composition,

the rubber composition containing at least one polymer containing an ethylene unit and at least one resin component containing a cyclic structure,
the tire satisfying the following relationship (1): $A/T \geq 0.80$,

wherein A represents an acetone-extractable content (%) of the rubber composition, and T represents a thickness (mm) of the tread portion measured on an equator in a cross section taken in a radial direction of the tire.

ADVANTAGEOUS EFFECTS OF INVENTION

The tire according to the present invention includes a tread portion including a rubber composition that contains a polymer containing an ethylene unit and a resin component containing a cyclic structure, and the tire also satisfies relationship (1). Thus, the present invention provides a tire having excellent wet grip performance during high-speed driving.

BRIEF DESCRIPTION OF DRAWINGS

FIG. 1 shows a cross section of a part of a pneumatic tire according to one embodiment of the present invention taken in the meridional direction.
FIG. 2 shows a cross section of a tread portion of a tire taken along a plane including the tire axis.

DESCRIPTION OF EMBODIMENTS

The tire of the present invention includes a tread portion including a rubber composition that contains a polymer containing an ethylene unit and a resin component containing a cyclic structure, and the tire also satisfies relationship (1).
The mechanism for the above advantageous effect is not clear but is believed to be as follows.
It is considered that as the polymer containing an ethylene unit has high molecular mobility, more heat generation may occur.
Here, when the polymer has a low molecular weight (liquid), as its polarity is far from that of the resin containing a cyclic structure, the liquid polymer containing an ethylene unit is more likely to migrate to the outside of the rubber and more heat generation can occur on the surface of the rubber.
On the other hand, when the polymer has a high molecular weight (solid), the polymer forms a rubber matrix and is less likely to migrate, but at the same time the polymer also has a lower molecular mobility and thus is less likely to adversely affect heat generation. Then, the resin having a lower molecular weight than the high molecular weight polymer containing an ethylene unit, in contrast, will migrate to the surface of the rubber and may increase the adhesion on the surface of the rubber.

Moreover, as the acetone-extractable content A is a value related to the total amount of plasticizers and the like in the rubber composition, a larger such value may lead to a larger concentration gradient. Thus, a larger concentration gradient can be produced by satisfying a sufficient acetone-extractable content A relative to the thickness T of the tread portion. Furthermore, it is considered that the migration of these components can be facilitated during high-speed driving where the centrifugal force acting on the tread portion is increased.

It is believed that as the heat generation of the rubber composition in the tread portion and the adhesion on the tread surface can be improved due to the above mechanism of action, excellent wet grip performance during high-speed driving can be obtained.

Accordingly, the tire solves the problem (purpose) of providing a tire having excellent wet grip performance during high-speed driving by a formulation which includes a tread portion including a rubber composition containing a polymer containing an ethylene unit and a resin component containing a cyclic structure, and which satisfies the relationship (1): $A/T \geq 0.80$, wherein A represents the acetone-extractable content (%) of the rubber composition, and T represents the thickness (mm) of the tread portion measured on the equator in a cross section taken in the radial direction of the tire. In other words, the parameter of the relationship (1): $A/T \geq 0.80$ does not define the problem (purpose), and the problem herein is to provide a tire having excellent wet grip performance during high-speed driving. In order to solve this problem, the tire has been formulated to satisfy the parameter.

The tire of the present invention includes a tread portion including a rubber composition that contains a polymer containing an ethylene unit and a resin component containing a cyclic structure.


<Tread rubber composition>


The rubber composition (tread rubber composition) included in the tread portion contains a polymer containing an ethylene unit (structural unit formed of ethylene: $-CH_2-CH_2-$).

The polymer containing an ethylene unit may be either a high molecular weight polymer or a low molecular weight polymer.

The polymer containing an ethylene unit may be any polymer that contains an ethylene unit. To more suitably achieve the advantageous effect, the polymer is desirably a multi-component copolymer containing an ethylene unit, a conjugated diene unit, and an aromatic vinyl unit.

The conjugated diene unit in the multi-component copolymer is a structural unit derived from a conjugated diene compound. Examples of the conjugated diene compound include 1,3-butadiene, isoprene, 1,3-pentadiene, 2,3-dimethylbutadiene, 2-phenyl-1,3-butadiene, and 1,3-hexadiene. These may be used alone or in combinations of two or more. Preferred are 1,3-butadiene and isoprene, with 1,3-butadiene being more preferred.

The aromatic vinyl unit in the multi-component copolymer is a structural unit derived from an aromatic vinyl compound. Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. These may be used alone or in combinations of two or more. Preferred are styrene and $\alpha$-methylstyrene, with styrene being more preferred.

For example, the multi-component copolymer may be prepared by copolymerizing ethylene, a conjugated diene compound, and an aromatic vinyl compound, or by copolymerizing a combination of a conjugated diene compound and an aromatic vinyl compound or a combination of ethylene, a conjugated diene compound, and an aromatic vinyl compound, and then hydrogenating the copolymer to convert some conjugated diene units to non-conjugated olefin units. In other words, the multi-component copolymer may be a copolymer of ethylene, a conjugated diene compound, and an aromatic vinyl compound, or may be a hydrogenated product (hydrogenated copolymer) of a copolymer of a conjugated diene compound and an aromatic vinyl compound or a copolymer of ethylene, a conjugated diene compound, and an aromatic vinyl compound. Each of these copolymers may be used alone, or two or more of these may be used in combination. Among these, the multi-component copolymer is preferably a hydrogenated product of a copolymer of a conjugated diene compound and an aromatic vinyl compound, more preferably a hydrogenated styrene-butadiene copolymer, in order to better achieve the advantageous effect.

The multi-component copolymer may be prepared by any polymerization method such as random polymerization or block polymerization, preferably by random polymerization.

When the multi-component copolymer is a hydrogenated copolymer, the hydrogenation may be performed by any method under any reaction condition, including known methods and known conditions. Usually, the hydrogenation is performed at 20 to 150°C under an elevated hydrogen pressure of 0.1 to 10 MPa in the presence of a hydrogenation catalyst. Other methods and conditions related to production processes are not limited either, and, for example, those described in WO 2016/039005 (herein incorporated by reference) may be used.

As described above, the polymer containing an ethylene unit may have either a high molecular weight or a low molecular weight. In the present invention, however, the polymer containing an ethylene unit and having a high molecular weight is a component that is not extractable with an organic solvent such as acetone from the vulcanized rubber composition and is used as a rubber component. On the other hand, the polymer containing an ethylene unit and having a low molecular weight is a component that is extractable with an organic solvent such as acetone from the vulcanized rubber composition and is used as an acetone-extractable component or a plasticizer component.

(Rubber component)

The high molecular weight polymer containing an ethylene unit used as a rubber component (the polymer containing an ethylene unit and having a high molecular weight) preferably has a weight average molecular weight (Mw) of 100,000 or more, more preferably 150,000 or more, still more preferably 250,000 or more. The Mw is also preferably 2,000,000 or less, more preferably 1,000,000 or less, still more preferably 600,000 or less, particularly preferably 500,000 or less. When the Mw is within the range indicated above, the advantageous effect tends to be better achieved.

In the present invention, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. Moreover, the Mw of polymers containing modifying groups should be measured before they are subjected to such modification because otherwise accurate Mw measurements cannot be obtained due to the interaction between the modifying groups and the silica gel in the column.

The amount of the high molecular weight polymer(s) containing an ethylene unit based on 100% by mass of the rubber component content in the tread rubber composition is preferably 30% by mass or more, more preferably 40% by mass or more, still more preferably 50% by mass or more, particularly preferably 60% by mass or more. The upper limit may be 100% by mass, but is preferably 90% by mass or less, more preferably 80% by mass or less, still more preferably 70% by mass or less. When the amount is within the range indicated above, the advantageous effect tends to be better achieved.

To better achieve the advantageous effect, the high molecular weight polymer containing an ethylene unit is preferably a hydrogenated product of a high molecular weight copolymer of a conjugated diene compound and an aromatic vinyl compound, more preferably a hydrogenated styrene-butadiene high molecular weight copolymer.

The hydrogenated product of a high molecular weight copolymer of a conjugated diene compound and an aromatic vinyl compound preferably has a degree of hydrogenation (ratio of hydrogenated conjugated diene moieties of the high molecular weight copolymer of a conjugated diene compound and an aromatic vinyl compound) of 60 mol% or higher, more preferably 75 mol% or higher, still more preferably 80 mol% or higher, particularly preferably 90 mol% or higher, most preferably 93 mol% or higher. The upper limit of the degree of hydrogenation is preferably 99 mol% or lower, more preferably 98 mol% or lower. When the degree of hydrogenation is within the range indicated above, the advantageous effect tends to be more suitably achieved.

In the present invention, the degree of hydrogenation can be calculated from the rate of decrease in unsaturated bond signals in the $^1$H-NMR spectrum measured.

The hydrogenated product of a high molecular weight copolymer of a conjugated diene compound and an aromatic vinyl compound preferably has a weight average molecular weight (Mw) of 100,000 or more, more preferably 150,000 or more, still more preferably 250,000 or more. The Mw is also preferably 2,000,000 or less, more preferably 1,000,000 or less, still more preferably 600,000 or less, particularly preferably 500,000 or less. When the Mw is within the range indicated above, the advantageous effect tends to be better achieved.

The hydrogenated product of a high molecular weight copolymer of a conjugated diene compound and an aromatic vinyl compound preferably has an aromatic vinyl unit content of 5% by mass or higher, more preferably 10% by mass or higher, still more preferably 15% by mass or higher, particularly preferably 20% by mass or higher, most preferably 25% by mass or higher. The upper limit of the aromatic vinyl unit content is preferably 40% by mass or lower, more preferably 35% by mass or lower. When the aromatic vinyl unit content is within the range indicated above, the advantageous effect tends to be more suitably achieved.

Here, when it is a hydrogenated styrene-butadiene high molecular weight copolymer, the styrene content is desirably within the range indicated above.

In the present invention, the aromatic vinyl unit content, e.g., the styrene content, can be measured by $^1$H-NMR analysis, specifically, as described later in EXAMPLES.

The amount of the hydrogenated product(s) of a high molecular weight copolymer of a conjugated diene compound and an aromatic vinyl compound (preferably hydrogenated styrene-butadiene high molecular weight copolymer(s)) based on 100% by mass of the rubber component content in the tread rubber composition is preferably 30% by mass or more, more preferably 40% by mass or more, still more preferably 50% by mass or more, particularly preferably 60% by mass or more. The upper limit may be 100% by mass, but is preferably 90% by mass or less, more preferably 80% by mass or less, still more preferably 70% by mass or less. When the amount is within the range indicated above, the advantageous effect tends to be better achieved.

Rubber components other than the high molecular weight polymers containing an ethylene unit that may be used in the tread rubber composition may include those known in the tire field. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these rubber components may be used alone, or two or more of these may be used in combination. To better achieve the advantageous effect, the rubber components may preferably include at least one selected from isoprene-based rubbers, BR, and SBR, more preferably a combination of an isoprene-based rubber and BR.

The rubber components other than the high molecular weight polymers containing an ethylene unit that may be used in the tread rubber composition are components which contribute to crosslinking and are generally polymers having a weight average molecular weight (Mw) of 100,000 or more, and which are not extractable with an organic solvent such as acetone from the vulcanized rubber composition.

The weight average molecular weight of the rubber components is preferably 150,000 or more, more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

When the tread rubber composition contains isoprene-based rubbers, the amount of isoprene-based rubbers based on 100% by mass of the rubber component content is preferably 10% by mass or more, more preferably 20% by mass or more, still more preferably 25% by mass or more. The upper limit is preferably 50% by mass or less, more preferably 40% by mass or less, still more preferably 30% by mass or less. When the amount is within the range indicated above, the advantageous effect tends to be better achieved.

Any BR may be used, and examples include those commonly used in the tire industry, including: high cis BR such as BR1220 available from Zeon Corporation, BR150B available from Ube Industries, Ltd., and BR1280 available from LG Chem; BR containing 1,2-syndiotactic polybutadiene crystals (SPB), such as VCR412 and VCR617 both available from Ube Industries, Ltd.; and polybutadiene rubbers synthesized using rare earth catalysts (rare earth-catalyzed BR). Each of these polybutadiene rubbers may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the tread rubber composition contains BR, the amount of BR based on 100% by mass of the rubber component content is preferably 3% by mass or more, more preferably 5% by mass or more, still more preferably 7% by mass or more, but is preferably 30% by mass or less, more preferably 20% by mass or less, still more preferably 10% by mass or less. When the amount is within the range indicated above, the advantageous effect tends to be better achieved.

Any SBR may be used, and examples include emulsion-polymerized styrene-butadiene rubbers (E-SBR) and solution-polymerized styrene-butadiene rubbers (S-SBR). Also usable are hydrogenated SBR in which the double bonds of the butadiene portion are appropriately hydrogenated. Examples of commercial products include those available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, particularly preferably 20% by mass or higher. The styrene content is preferably 50% by mass or lower, more preferably 40% by mass or lower, still more preferably 30% by mass or lower. When the styrene content is within the range indicated above, the advantageous effect tends to be better achieved.

Herein, the styrene content of the SBR can be determined by $^1$H-NMR analysis.

The vinyl content of the SBR is preferably 10 mol% or higher, more preferably 20 mol% or higher, still more preferably 30 mol% or higher. The vinyl content is preferably 90 mol% or lower, more preferably 80 mol% or lower, still more preferably 70 mol% or lower. When the vinyl content is within the range indicated above, the advantageous effect tends to be better achieved.

Herein, the vinyl content (1,2-butadiene unit content) of the SBR can be measured by infrared absorption spectrometry.

When the tread rubber composition contains SBR, the amount of SBR (the combined amount of non-modified SBR, modified SBR, and the hydrogenated styrene-butadiene high molecular weight copolymers) based on 100% by mass of the rubber component content is preferably 30% by mass or more, more preferably 40% by mass or more, still more preferably 50% by mass or more, particularly preferably 60% by mass or more. The upper limit may by 100% by mass, but is preferably 90% by mass or less, more preferably 80% by mass or less, still more preferably 70% by mass or less. When the amount is within the range indicated above, the advantageous effect tends to be better achieved.

The rubber components (such as the above-described high molecular weight polymer containing an ethylene unit, diene rubbers, etc.) may each be a rubber extended by a plasticizer component such as an oil, a resin component, or a liquid polymer. These extended rubbers may be used alone or in combinations of two or more. The plasticizer component used in the extended rubber may be as described later. Moreover, the plasticizer component content of the extended rubber is not limited, but is usually about 10 to 50 parts by mass per 100 parts by mass of the rubber solids content.

The rubber components (such as the above-described high molecular weight polymer containing an ethylene unit, diene rubbers, etc.) may be modified to introduce therein a functional group interactive with filler such as silica. Examples of the functional group include a silicon-containing group (-SiR$_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. Preferred among these is a silicon-containing group. More preferred is - SiR$_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

(Plasticizer)

In the present invention, as described earlier, a low molecular weight polymer containing an ethylene unit may be used as the polymer containing an ethylene unit.

The weight average molecular weight (Mw) of the low molecular weight polymer containing an ethylene unit may preferably be less than 100,000, preferably 50,000 or less, more preferably 20,000 or less. The Mw is also preferably 1,000 or more, more preferably 2,000 or more. When the Mw is within the range indicated above, the advantageous effect tends to be better achieved.

The amount of the low molecular weight polymer(s) containing an ethylene unit per 100 parts by mass of the rubber component content in the tread rubber composition is preferably 5% by mass or more, more preferably 15% by mass or more, still more preferably 25% by mass or more, but is preferably 50 parts by mass or less, more preferably 40 parts by mass or less, still more preferably 35 parts by mass or less. When the amount is within the range indicated above, the advantageous effect tends to be better achieved.

To better achieve the advantageous effect, the low molecular weight polymer containing an ethylene unit is preferably a hydrogenated product of a low molecular weight copolymer of a conjugated diene compound and an aromatic vinyl compound, more preferably a hydrogenated styrene-butadiene low molecular weight copolymer.

The hydrogenated product of a low molecular weight copolymer of a conjugated diene compound and an aromatic vinyl compound preferably has a degree of hydrogenation (ratio of hydrogenated conjugated diene moieties of the copolymer of a conjugated diene compound and an aromatic vinyl compound) of 25 mol% or higher, more preferably 40 mol% or higher, still more preferably 50 mol% or higher. The upper limit of the degree of hydrogenation is preferably 98 mol% or lower, more preferably 95 mol% or lower, still more preferably 90 mol% or lower. When the degree of hydrogenation is within the range indicated above, the advantageous effect tends to be more suitably achieved.

The hydrogenated product of a low molecular weight copolymer of a conjugated diene compound and an aromatic vinyl compound preferably has a weight average molecular weight (Mw) of 50,000 or less, more preferably 20,000 or less. The Mw is also preferably 1,000 or more, more preferably 2,000 or more. When the Mw is within the range indicated above, the advantageous effect tends to be better achieved.

The hydrogenated product of a low molecular weight copolymer of a conjugated diene compound and an aromatic vinyl compound preferably has an aromatic vinyl unit content of 5% by mass or higher, more preferably 30% by mass or higher, still more preferably 40% by mass or higher, particularly preferably 45% by mass or higher. The upper limit of the aromatic vinyl unit content is preferably 70% by mass or lower, more preferably 65% by mass or lower, still more preferably 60% by mass or lower. When the aromatic vinyl unit content is within the range indicated above, the advantageous effect tends to be more suitably achieved.

Here, when it is a hydrogenated styrene-butadiene low molecular weight copolymer, the styrene content is desirably within the range indicated above.

The amount of the hydrogenated product(s) of a low molecular weight copolymer of a conjugated diene compound and an aromatic vinyl compound (preferably hydrogenated styrene-butadiene low molecular weight copolymer(s)) per 100 parts by mass of the rubber component content in the tread rubber composition is preferably 5 parts by mass or more, more preferably 15 parts by mass or more, still more preferably 25 parts by mass or more, but is preferably 50 parts by mass or less, more preferably 40 parts by mass or less, still more preferably 35 parts by mass or less. When the amount is within the range indicated above, the advantageous effect tends to be better achieved.

The tread rubber composition contains a resin component containing a cyclic structure.

The resin component containing a cyclic structure refers to a resin component (polymer) that contains a cyclic structure in the molecule, such as a resin component containing a cyclic structure as a structural unit.

In the present invention, the polymer containing an ethylene unit does not correspond to a resin component containing a cyclic structure.

The resin component containing a cyclic structure is preferably a component that is extractable with a solvent from the rubber composition (vulcanized rubber composition) containing the resin component. Moreover, the resin component containing a cyclic structure may be either a solid resin (resin which is solid at room temperature (25°C)) or a liquid resin (resin which is liquid at room temperature (25°C)), but is preferably a solid resin. Examples of the cyclic structure include aromatic rings, aliphatic rings, and heterocycles and polycycles of the foregoing rings. Preferred among these are aromatic rings, with a benzene ring being more preferred.

Examples of the resin component containing a cyclic structure include aromatic vinyl polymers, coumarone-indene resins, coumarone resins, indene resins, phenol resins, rosin resins, petroleum resins, terpene resins, and acrylic resins. To better achieve the advantageous effect, aromatic vinyl polymers, coumarone-indene resins, coumarone resins, and indene resins are preferred among these.

These may be used alone or in combinations of two or more.

Examples of the aromatic vinyl polymers include resins produced by polymerizing α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

Examples of the coumarone-indene resins include resins which contain coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

Examples of the coumarone resins include resins which contain coumarone as the main monomer component forming the skeleton (backbone) of the resins.

Examples of the indene resins include resins which contain indene as the main monomer component forming the skeleton (backbone) of the resins.

Examples of the phenol resins include alkylphenol resins. Examples of the alkylphenol resins include alkylphenol-aldehyde condensation resins produced by reacting an alkylphenol and an aldehyde such as formaldehyde, acetaldehyde, or furfural in the presence of an acid or alkali catalyst; alkylphenol-alkyne condensation resins produced by reacting an alkylphenol and an alkyne such as acetylene; and modified alkylphenol resins obtained by modifying any of the foregoing resins with a compound such as cashew oil, tall oil, linseed oil, various animal or vegetable oils, unsaturated fatty acids, rosin, alkylbenzene resins, aniline, or melamine. Alkylphenol-alkyne condensation resins are preferred among these, with alkylphenol-acetylene condensation resins being particularly preferred.

Examples of the alkylphenols of the alkylphenol resins include cresol, xylenol, t-butylphenol, octylphenol, and nonylphenol. Branched alkyl group-containing phenols such as t-butylphenol are preferred among these, with t-butylphenol being particularly preferred.

Examples of the rosin resins include rosin-based resins typified by natural rosins, polymerized rosins, modified rosins, and esterified compounds thereof, and hydrogenated products thereof.

Examples of the petroleum resins include C5 resins, C9 resins, C5/C9 resins, and dicyclopentadiene (DCPD) resins.

Examples of the terpene resins include polyterpene resins produced by polymerizing a terpene compound, and aromatic-modified terpene resins produced by polymerizing a terpene compound and an aromatic compound. Hydrogenated products of these terpene resins are also usable.

A polyterpene resin refers to a resin produced by polymerizing a terpene compound. The term "terpene compound" refers to a hydrocarbon having a composition represented by $(C_5H_8)_n$ or an oxygen-containing derivative thereof, each of which has a terpene backbone and is classified as a monoterpene ($C_{10}H_{16}$), sesquiterpene ($C_{15}H_{24}$), diterpene ($C_{20}H_{32}$), or other terpene. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these because their polymerization reaction is simple, and they are made from natural pine resin and therefore inexpensive. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol. Moreover, examples of the styrene compounds include styrene and α-methylstyrene.

Examples of the acrylic resins include styrene acrylic resins, such as styrene acrylic resins which contain a carboxy group and are produced by copolymerizing an aromatic vinyl monomer component and an acrylic monomer component. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are herein incorporated by reference) using no or minimal amounts of auxiliary raw materials such as polymerization initiators, chain transfer agents, and organic solvents. Herein, the term "(meth)acrylic" means methacrylic and acrylic.

Examples of acrylic monomer components that may be contained in the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of aromatic vinyl monomer components that may be contained in the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The resin component containing a cyclic structure (e.g., aromatic vinyl polymer, coumarone-indene resin, coumarone resin, indene resin, phenol resin, rosin resin, petroleum resin, terpene resin, or acrylic resin) preferably has a softening point of 50°C or higher, more preferably 55°C or higher, still more preferably 60°C or higher. The upper limit of the softening point is preferably 160°C or lower, more preferably 150°C or lower, still more preferably 145°C or lower. When the softening point is within the range indicated above, the advantageous effect tends to be better achieved.

In the present invention, the softening point of the resin component is determined in accordance with JIS K 6220-1:2001 using a ring and ball softening point measuring apparatus and defined as the temperature at which the ball drops down.

Moreover, the softening point of the resin component is usually within about 50°C ± 5°C of the glass transition temperature of the resin component.

Examples of commercial products of the resin component containing a cyclic structure include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The amount of the resin component(s) containing a cyclic structure (preferably the amount of aromatic vinyl polymers) per 100 parts by mass of the rubber component content in the tread rubber composition is preferably 5 parts by mass or more, more preferably 8 parts by mass or more, still more preferably 10 parts by mass or more, particularly preferably 12 parts by mass or more. The upper limit of the amount is preferably 60 parts by mass or less, more preferably 40 parts by mass or less, still more preferably 20 parts by mass or less. When the amount is within the range indicated above, the advantageous effect can be more suitably achieved.

The advantageous effect can be better achieved when the amount of the resin component(s) containing a cyclic structure is a predetermined value or more, in particular, when the amount is 10 parts by mass or more. The mechanism for this is not clear, but is believed to be as follows.

As the amount of the resin component which has a molecular weight lower than the high molecular weight polymer containing an ethylene unit is increased, it is considered that the resin component is more likely to migrate to the surface of the rubber and may increase the adhesion to the surface of the rubber, resulting in a higher wet grip performance-improving effect.

Thus, it is believed that as the adhesion on the tread surface is further improved, the wet grip performance during high-speed driving can be significantly improved.

The tread rubber composition preferably contains a plasticizer.

The term "plasticizer" refers to a material that imparts plasticity to rubber components, and examples include liquid plasticizers (plasticizers which are liquid at room temperature (25°C)) and resins (resins which are solid at room temperature (25°C)).

In the present invention, the low molecular weight polymer containing an ethylene unit and the resin component containing a cyclic structure also correspond to plasticizers.

The amount of plasticizers (the combined amount of the low molecular weight polymers containing an ethylene unit, the resin components containing a cyclic structure, and plasticizers other than the foregoing) per 100 parts by mass of the rubber component content in the tread rubber composition is preferably 10 parts by mass or more, more preferably 20 parts by mass or more, still more preferably 30 parts by mass or more, particularly preferably 32 parts by mass or more. The upper limit is preferably 80 parts by mass or less, more preferably 60 parts by mass or less, still more preferably 50 parts by mass or less, particularly preferably 40 parts by mass or less. When the amount is within the range indicated above, the advantageous effect tends to be better achieved. Here, these plasticizer components include the extending components in the extended polymers described above. Moreover, the amount of these components can be determined by subjecting the vulcanized rubber composition to extraction with acetone as described later and thermogravimetry (TGA) to determine the ratio of the acetone-extractable content and the polymer content.

Examples of liquid plasticizers (plasticizers which are liquid at room temperature (25°C)) that may be used in the tread rubber composition include, in addition to the aforementioned low molecular weight polymers containing an ethylene unit and resin components containing a cyclic structure, oils and liquid polymers (liquid resins, liquid diene polymers, liquid farnesene-based polymers, etc.). These may be used alone or in combinations of two or more.

Examples of oils include process oils, plant oils, and mixtures thereof. Examples of process oils include paraffinic process oils, aromatic process oils, and naphthenic process oils, such as mild extract solvated (MES), distillate aromatic extract (DAE), treated distillate aromatic extract (TDAE), treated residual aromatic extract (TRAE), and residual aromatic extract (RAE). Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Examples of commercial products include those available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. Here, in view of life cycle assessment, oils after being used as lubricating oils in mixers for processing rubber, engines, or other applications, waste cooking oils, and other similar oils may appropriately be used as the process oils or plant oils.

Examples of resin components include, in addition to the aforementioned resin components containing a cyclic structure, linear or branched C5 resins, olefin resins, and polyurethane resins. Hydrogenated products of these resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. These polymers may be modified at the chain end or the backbone with a polar group. Hydrogenated products of these polymers are also usable.

Examples of liquid farnesene-based polymers include liquid farnesene polymers and liquid farnesene-butadiene copolymers, all of which are liquid at 25°C. These polymers may be modified at the chain end or the backbone with a polar group. Hydrogenated products of these polymers are also usable.

The amount of liquid plasticizers (preferably the amount of oils) per 100 parts by mass of the rubber component content in the tread rubber composition is preferably 5 parts by mass or more, more preferably 10 parts by mass or more, still more preferably 20 parts by mass or more, particularly preferably 25 parts by mass or more. The upper limit is preferably 50 parts by mass or less, more preferably 40 parts by mass or less, still more preferably 35 parts by mass or less. When the amount is within the range indicated above, the advantageous effect tends to be better achieved. Here, the amount of liquid plasticizers includes the amount of the liquid components such as oils contained in the extended rubbers, if used.

Other examples of plasticizers include ester plasticizers (ester group-containing plasticizers), such as dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), tricresyl phosphate (TCP), and trixylenyl phosphate (TXP), and thymidine triphosphate (TTP). Ester plasticizers having a plurality of octyl ester groups, such as dioctyl adipate (DOA), dioctyl phthalate (DOP), dioctyl sebacate (DOS), or trioctyl phosphate (TOP), are preferred among these, with DOS or TOP being more preferred.

In addition to those mentioned above, low molecular weight products which have structures similar thereto and which are obtained by thermally decomposing or otherwise decomposing used rubber products, waste tires, plastic products, or other used products may also be used as the plasticizer components.

(Filler)

The tread rubber composition desirably contains a filler.

Examples of usable fillers include materials known in the rubber field, including inorganic fillers such as silica, carbon black, calcium carbonate, talc, alumina, clay, aluminum hydroxide, aluminum oxide, and mica; and poorly dispersible fillers, as well as bio char. Silica or carbon black is preferred among these. Moreover, recycled products obtained by burning and then purifying used rubber products, waste tires, plastic products, or other used products may appropriately be used as the fillers.

Any silica may be used and examples include dry silica (anhydrous silica) and wet silica (hydrous silica). Wet silica is preferred among these because it has a large number of silanol groups. In addition to the anhydrous silica and hydrous silica, silica produced from biomass materials such as rice husks may also be used. These may be used alone or in combinations of two or more.

The average primary particle size of the silica is preferably 25 nm or less, more preferably 20 nm or less, still more preferably 18 nm or less. The lower limit of the average primary particle size is not limited, but is preferably 3 nm or more, more preferably 5 nm or more, still more preferably 7 nm or more. When the average primary particle size is within the range indicated above, the advantageous effect tends to be more suitably achieved.

Here, the average primary particle size of the silica may be determined by observing the silica using a transmission or scanning electron microscope to measure at least 400 primary particles of the silica observed in the visual field, and averaging the measurements.

Examples of commercial silica include those available from Degussa, Rhodia, Tosoh Silica Corporation, Solvay Japan, Tokuyama Corporation, etc.

The amount of silica per 100 parts by mass of the rubber component content in the tread rubber composition is preferably 20 parts by mass or more, more preferably 50 parts by mass or more, still more preferably 80 parts by mass or more, particularly preferably 85 parts by mass or more. The upper limit of the amount is not limited, but is preferably 150 parts by mass or less, more preferably 120 parts by mass or less, still more preferably 100 parts by mass or less. When the amount is within the range indicated above, the advantageous effect can be more suitably achieved.

The advantageous effect can be better achieved when the amount of silica is a predetermined value or more, in particular, when the amount is 80 parts by mass or more. The mechanism for this is not clear, but is believed to be as follows.

As the presence of a larger amount of hydrophilic silica reduces the compatibility of the resin component containing a cyclic structure and/or the polymer containing an ethylene unit, both of which are hydrophobic, it is considered that they are more likely to migrate to the surface of the rubber, resulting in a higher wet grip performance-improving effect.

Thus, it is believed that as the adhesion on the tread surface is further improved, the wet grip performance during high-speed driving can be significantly improved.

The tread rubber composition which contains silica preferably further contains a silane coupling agent.

Any silane coupling agent may be used. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercial products include those available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the tread rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of usable carbon black include N134, N110, N220, N234, N219, N339, N330, N326, N351, N550, and N762. Besides the carbon black produced by burning mineral oils, carbon black produced by burning biomass-derived materials such as lignin may also be appropriately used. These may be used alone or in combinations of two or more. Examples of commercial products include those available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc.

The nitrogen adsorption specific surface area ($N_2SA$) of the carbon black is preferably 50 $m^2$/g or more, more preferably 80 $m^2$/g or more, still more preferably 100 $m^2$/g or more. The $N_2SA$ is also preferably 200 $m^2$/g or less, more preferably 150 $m^2$/g or less, still more preferably 130 $m^2$/g or less. When the $N_2SA$ is within the range indicated above, the advantageous effect tends to be better achieved.

Here, the nitrogen adsorption specific surface area of the carbon black can be determined in accordance with JIS K 6217-2:2001.

The amount of carbon black per 100 parts by mass of the rubber component content in the tread rubber composition is preferably 5 parts by mass or more, more preferably 15 parts by mass or more, still more preferably 20 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

The percentage of silica based on 100% by mass of the combined amount of silica and carbon black in the tread rubber composition is preferably 50% by mass or higher, more preferably 70% by mass or higher, still more preferably 75% by mass or higher. The upper limit is preferably 90% by mass or lower, more preferably 85% by mass or lower, still more preferably 82% by mass or lower. When the percentage of silica is within the range indicated above, the advantageous effect tends to be better achieved.

(Vulcanizing agent)

The tread rubber composition preferably contains a vulcanizing agent to moderately form crosslinks between the polymer chains to build a network, thereby better achieving the advantageous effect.

Any vulcanizing agent may be used, including, for example, sulfur.

Examples of the sulfur include those commonly used in the rubber industry, such as powdered sulfur, precipitated sulfur, colloidal sulfur, insoluble sulfur, highly dispersible sulfur, and soluble sulfur. Examples of commercial products include those available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of vulcanizing agents (preferably the amount of sulfur) per 100 parts by mass of the rubber component content in the tread rubber composition is preferably 0.5 parts by mass or more, more preferably 1.0 parts by mass or more, still more preferably 1.5 parts by mass or more. The amount is preferably 3.5 parts by mass or less, more preferably 3.0 parts by mass or less, still more preferably 2.8 parts by mass or less.

(Vulcanization accelerator)

The tread rubber composition desirably contains a vulcanization accelerator.

The amount of vulcanization accelerators per 100 parts by mass of the rubber component content in the tread rubber composition is preferably 1.0 parts by mass or more, more preferably 1.5 parts by mass or more, still more preferably 2.0 parts by mass or more, but is preferably 10.0 parts by mass or less, more preferably 7.0 parts by mass or less, still more preferably 5.0 parts by mass or less. When the amount is within the range indicated above, the advantageous effect tends to be better achieved.

Any type of vulcanization accelerator may be used, including usually used vulcanization accelerators. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide or guanidine vulcanization accelerators are preferred among these.

(Other components)

In view of properties such as crack resistance and ozone resistance, the tread rubber composition preferably contains an antioxidant.

Any antioxidant may be used. Examples include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine and quinoline antioxidants, with N-(1,3-dimethylbutyl)-N'-phenyl-p-phenylenediamine or polymerized 2,2,4-trimethyl-1,2-dihydroquinoline being more preferred. Examples of commercial products include those available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content in the tread rubber composition is preferably 0.2 parts by mass or more, more preferably 0.5 parts by mass or more, but is preferably 7.0 parts by mass or less, more preferably 4.0 parts by mass or less.

The tread rubber composition may contain stearic acid.

The amount of stearic acid per 100 parts by mass of the rubber component content in the tread rubber composition is preferably 0.5 to 10 parts by mass, more preferably 0.5 to 5 parts by mass.

Here, conventionally known stearic acid may be used, including, for example, those available from NOF Corporation, Kao Corporation, Fujifilm Wako Pure Chemical Corporation, Chiba Fatty Acid Co., Ltd., etc.

The tread rubber composition may contain zinc oxide.

The amount of zinc oxide per 100 parts by mass of the rubber component content in the tread rubber composition is preferably 0.5 to 10 parts by mass, more preferably 1 to 5 parts by mass.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The tread rubber composition may contain a wax.

The amount of waxes per 100 parts by mass of the rubber component content in the tread rubber composition is preferably 0.5 to 10 parts by mass, more preferably 1 to 5 parts by mass.

Any wax may be used, and examples include petroleum waxes and natural waxes. Synthetic waxes prepared by purifying or chemically treating multiple waxes are also usable. These waxes may be used alone or in combinations of two or more.

Examples of the petroleum waxes include paraffin waxes and microcrystalline waxes. The natural waxes may be any wax derived from a non-petroleum resource, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Examples of commercial products include those available from Ouchi Shinko Chemical Industrial Co., Ltd., Nippon Seiro Co., Ltd., Seiko Chemical Co., Ltd., etc.

In addition to the above-mentioned components, the tread rubber composition may appropriately contain additives usually used according to the application field, such as releasing agents and pigments.

The tread rubber composition may be prepared, for example, by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. Then, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

<Tire>

The tire of the present invention includes the rubber composition in a tread portion.

Examples of tires include pneumatic tires and non-pneumatic tires, with pneumatic tires being preferred. In particular, the tire may be suitably used as a summer tire, winter tire (e.g., studless winter tire, cold weather tire, snow tire, studded tire), or all-season tire. The tire may be used as a tire for passenger cars, large passenger cars, large SUVs, heavy duty vehicles such as trucks and buses, light trucks, or motorcycles, or as a racing tire (high performance tire), etc. Among these tires, the tire is preferably used as a passenger car tire or a heavy duty tire.

Herein, the term "passenger car tire" refers to a tire with a normal internal pressure of 300 kPa or lower and a normal load of 1300 kg or less, and the term "heavy duty tire" refers to a tire with a normal internal pressure of higher than 300 kPa and a normal load of more than 1300 kg.

The tire may be produced from the above-described rubber composition by usual methods. For example, an unvulcanized rubber composition containing various materials may be extruded into the shape of a tread and formed together with other tire components in a usual manner on a tire building machine to build an unvulcanized tire, which may then be heated and pressurized in a vulcanizer to produce a tire.

The tire of the present invention includes a tread portion including the rubber composition (vulcanized rubber composition) that contains a polymer containing an ethylene unit and a resin component containing a cyclic structure, and the tire satisfies the following relationship (1):

$$A/T \geq 0.80,$$

wherein A represents the acetone-extractable content (%) of the rubber composition, and T represents the thickness (mm) of the tread portion measured on the equator in a cross section taken in the radial direction of the tire.

The lower limit of the ratio A/T is preferably 1.20 or higher, more preferably 1.80 or higher, still more preferably 2.00 or higher, particularly preferably 2.60 or higher, most preferably 3.00 or higher. The upper limit is preferably 5.00 or lower, more preferably 4.00 or lower, still more preferably 3.80 or lower, particularly preferably 3.60 or lower, most preferably 3.50 or lower. When the ratio is within the range indicated above, the advantageous effect tends to be better achieved.

To better achieve the advantageous effect, the rubber composition (vulcanized rubber composition) desirably satisfies the following relationship:

$$A \geq 10.0\% \text{ by mass},$$

wherein A represents the acetone-extractable content (%).

The lower limit of A is preferably 15.0% by mass or higher, more preferably 19.0% by mass or higher, still more preferably 20.0% by mass or higher, particularly preferably 21.0% by mass or higher. The upper limit is preferably 30.0% by mass or lower, more preferably 28.0% by mass or lower, still more preferably 26.0% by mass or lower, particularly preferably 25.0% by mass or lower. When A is within the range indicated above, the advantageous effect tends to be better achieved.

The advantageous effect can be better achieved when the acetone-extractable content A is a predetermined value or higher, in particular, when A is 15% by mass or higher. The mechanism for this is not clear, but is believed to be as follows.

As the presence of a larger amount of acetone-extractables increases the mobility of the resin component containing a cyclic structure and/or the polymer containing an ethylene unit in the system, it is considered that a larger concentration gradient may be produced, resulting in a higher advantageous effect.

Thus, it is believed that as the adhesion on the tread surface is further improved, the wet grip performance during high-speed driving can be significantly improved.

Here, the acetone-extractable content (A) of the rubber composition (vulcanized rubber composition) is measured by the following method:

The acetone-extractable content (A) (unit: % by mass based on the rubber composition (sample)) is measured by a method for measuring the acetone-extractable content in accordance with JIS K 6229:2015.

Here, the sample used in the measurement is collected from the tread portion of the tire.

The acetone-extractable content (A) may be controlled by methods known to a person skilled in the art. For example, A tends to increase when the amount of plasticizers such as oils is increased.

In the tire of the present invention, the thickness T (mm) of the tread portion measured on the equator in a cross section taken in the radial direction of the tire is preferably 18.0 mm or less, more preferably 12.0 mm or less, still more preferably 10.0 mm or less, particularly preferably 7.0 mm or less. The lower limit is preferably 4.0 mm or more, more preferably 4.5 mm or more, still more preferably 5.0 mm or more, particularly preferably 5.5 mm or more. When the thickness T is within the range indicated above, the advantageous effect tends to be better achieved.

In the present invention, the term "thickness T of the tread portion measured on the equator in a cross section taken in the radial direction of the tire" refers to the distance from the tread surface to the interface of the belt-reinforcing layer, belt layer, carcass layer, or other reinforcing layer containing a fiber material, which is outermost with respect to the tire, as measured on the equator in a cross section taken along a plane including the axis of the tire. Here, when the tread portion has a groove on the equator of the tire, the thickness T is the linear distance from the intersection of the equator and a straight line connecting the edges of the groove which are outermost in the radial direction of the tire.

The advantageous effect can be better achieved when the thickness T is a predetermined value or less, in particular, when the thickness is 12.0 mm or less. The mechanism for this is not clear, but is believed to be as follows.

As a smaller thickness T leads to a smaller movable range of the resin component containing a cyclic structure and/or the polymer containing an ethylene unit, it is considered that a larger concentration gradient may be produced, resulting in a higher advantageous effect.

Thus, it is believed that as the adhesion on the tread surface is further improved, the wet grip performance during high-speed driving can be significantly improved.

Moreover, the thickness Tc of the rubber layer of the tread portion measured on the equator of the tire is preferably 15.0 mm or less, more preferably 12.0 mm or less, still more preferably 10.0 mm or less. The lower limit is preferably 2.0 mm or more, more preferably 3.0 mm or more, still more preferably 4.0 mm or more.

Here, Tc can be measured as described for the thickness T of the tread portion measured on the equator in a cross section taken in the radial direction of the tire, and can be determined by measuring the distance from the outermost tread surface to the interface of the rubber layer formed of the above-described rubber composition, which is innermost with respect to the tire.

In the tire of the present invention, the groove depth D of a circumferential groove provided in the tread portion is preferably 4.0 mm or more, more preferably 5.0 mm or more, still more preferably 6.0 mm or more, but is preferably 16.0 mm or less, more preferably 10.0 mm or less, still more preferably 8.0 mm or less. When the groove depth D is within the range indicated above, the advantageous effect tends to be better achieved.

Herein, the groove depth D of the circumferential groove is measured along the normal of a plane extended from the outermost tread surface forming the ground contact surface, and refers to the distance from the plane extended from the surface forming the ground contact surface to the deepest groove bottom, which is the largest among the groove depths of the circumferential grooves provided.

The tread portion of the tire of the present invention preferably has a negative ratio S (%) of 40% or lower, more preferably 38% or lower, still more preferably 35% or lower. The negative ratio is preferably 15% or higher, more preferably 20% or higher, still more preferably 25% or higher. When the negative ratio is within the range indicated above, the advantageous effect tends to be better achieved.

Here, the negative ratio (negative ratio within the ground contact surface of the tread portion) refers to the ratio of the total groove area within the ground contact surface relative to the total area of the ground contact surface and is determined as described below.

Herein, when the tire is a pneumatic tire, the negative ratio is calculated from the contact patch of the tire under conditions including a normal rim, a normal internal pressure, and a normal load. When the tire is a non-pneumatic tire, the negative ratio can be similarly determined without the need of a normal internal pressure.

The term "normal rim" refers to a rim specified for each tire by the standard in a standard system including standards according to which tires are provided, and may be, for example, the standard rim in JATMA, "design rim" in TRA, or "measuring rim" in ETRTO.

The term "normal internal pressure" refers to an air pressure specified for each tire by the standard and may be the maximum air pressure in JATMA, the maximum value shown in Table "TIRE LOAD LIMITS AT VARIOUS COLD INFLATION PRESSURES" in TRA, or "inflation pressure" in ETRTO.

The term "normal load" refers to a load specified for each tire by the standard and may be the maximum load capacity in JATMA, the maximum value shown in Table "TIRE LOAD LIMITS AT VARIOUS COLD INFLATION PRESSURES" in TRA, or "load capacity" in ETRTO.

The contact patch may be determined by mounting the tire on a normal rim, applying a normal internal pressure to the tire, and allowing the tire to stand at 25°C for 24 hours, followed by applying black ink to the tread surface of the tire and pressing the tread surface against a cardboard at a normal load (camber angle: 0°) for transfer to the cardboard.

The transfer may be performed on the tire in five positions, each rotated by 72° in the circumferential direction. Namely, five contact patches may be determined.

The contour points of each of the five contact patches are smoothly connected to draw a figure, the area of which is defined as the total area, and the transferred area as a whole constitutes the ground contact area. The average of the results of the five positions is determined and then the negative ratio (%) is calculated by the equation: [1-{Average of areas of five contact patches transferred to cardboard (parts with black ink)}/{Average of five total areas transferred to cardboard (figures obtained from contour points)}] × 100 (%).

Here, the average length or area is the simple average of the five values.

To better achieve the advantageous effect, desirably the tire of the present invention includes a tread portion including the rubber composition (vulcanized rubber composition) that contains a polymer containing an ethylene unit and a resin component containing a cyclic structure, and the tire satisfies the following relationship:

$$(A/T) \times D \geq 10.0,$$

wherein A represents the acetone-extractable content (%) of the rubber composition, T represents the thickness (mm) of the tread portion measured on the equator in a cross section taken in the radial direction of the tire, and D represents the groove depth (mm) of a circumferential groove provided in the tread portion.

The lower limit of the value of $(A/T) \times D$ is preferably 12.0 or more, more preferably 13.0 or more, still more preferably 14.0 or more. The upper limit is preferably 30.0 or less, more preferably 25.0 or less, still more preferably 24.0 or less. When the value is within the range indicated above, the advantageous effect tends to be better achieved.

The reason why a value within the range indicated above can lead to good results is not clear, but is considered to be as follows. Adjusting the ratio A/T to a predetermined value or higher can improve grip performance on the surface of the tread rubber. At the same time, adjusting the product of the ratio and the groove depth to a predetermined value or more can ensure water drainage on the tread surface, thereby facilitating the ground contact of the surface of the tread rubber. Moreover, the presence of a groove facilitates deformation of the rubber in the tread portion to cause energy loss. Thus, the wet grip performance during high-speed driving can be improved.

To better achieve the advantageous effect, desirably the tire of the present invention includes a tread portion including the rubber composition (vulcanized rubber composition) that contains a polymer containing an ethylene unit and a resin component containing a cyclic structure, and the tire satisfies the following relationship:

$$(A/T)/S \times 100 \geq 3.0,$$

wherein A represents the acetone-extractable content (%) of the rubber composition, T represents the thickness (mm) of the tread portion measured on the equator in a cross section taken in the radial direction of the tire, and S represents the negative ratio (%) of the tread portion.

The lower limit of the value of $(A/T)/S \times 100$ is preferably 3.5 or more, more preferably 5.0 or more, still more preferably 8.0 or more. The upper limit is preferably 20.0 or less, more preferably 15.0 or less, still more preferably 12.0 or less, particularly preferably 11.0 or less. When the value is within the range indicated above, the advantageous effect tends to be better achieved.

The reason why a value within the range indicated above can lead to good results is not clear, but is considered to be as follows. A higher negative ratio improves water drainage but may reduce the actual ground contact area of the tread portion. Thus, when the ratio A/T is adjusted to be sufficiently high relative to the negative ratio, the balance between the grip performance and water drainage on the tread surface can be improved, and the wet grip performance during high-speed driving can be improved.

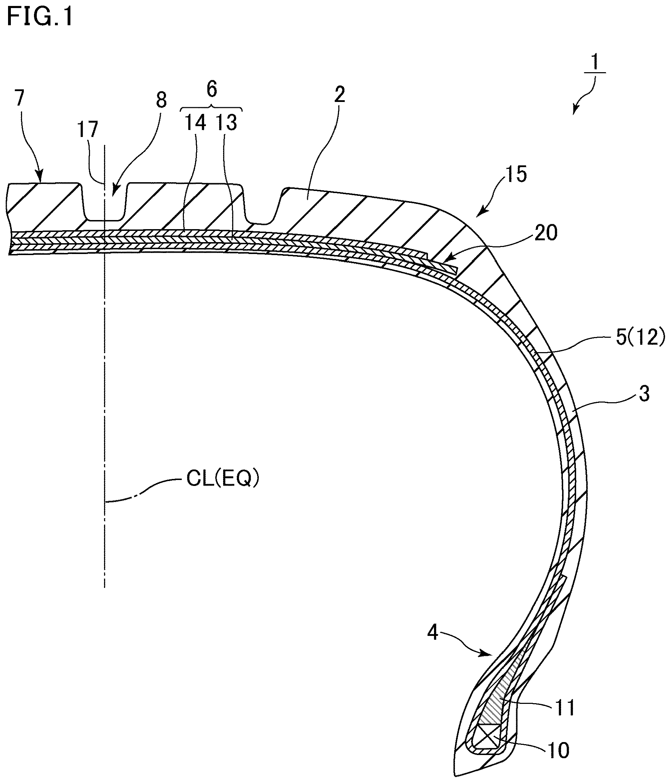

FIG. 1 shows a cross section of a part of a pneumatic tire 1 according to one embodiment of the present invention taken in the meridional direction. Here, the tire of the present invention is not limited to the following embodiments.

In FIG. 1, the vertical direction corresponds to the radial direction of the tire (hereinafter, also referred to simply as radial direction), the horizontal direction corresponds to the axial direction of the tire (hereinafter, also referred to simply as axial direction), and the direction perpendicular to the paper corresponds to the circumferential direction of the tire (hereinafter, also referred to simply as circumferential direction). The tire 1 has a shape that is horizontally substantially symmetrical about the center line CL in FIG. 1. The center line CL is also referred to as tread center line and defines the equator EQ of the tire 1.

The tire 1 includes a tread portion 2, a sidewall portion 3, a bead portion 4, a carcass 5, and a belt 6. The tire 1 is a tubeless tire.

The tread portion 2 includes a tread face 7. The tread face 7 has a radially outwardly convex shape in a cross section taken in the meridional direction of the tire 1. The tread face 7 will contact the road surface. The tread face 7 has a plurality of circumferentially extending grooves 8 carved therein. The grooves 8 define a tread pattern. The axially (widthwise) external part of the tread portion 2 is referred to as a shoulder portion 15. The sidewall portion 3 extends substantially inwardly in the radial direction from the end of the tread portion 2. The sidewall portion 3 consists of a crosslinked rubber or the like.

As shown in FIG. 1, the bead portion 4 is located radially substantially inward from the sidewall portion 3. The bead portion 4 includes a core 10 and an apex 11 radially outwardly extending from the core 10. The core 10 has a ring shape along the circumferential direction of the tire. The core 10 consists of a wound inextensible wire. Typically, a steel wire is used in the core 10. The apex 11 is radially outwardly tapered. The apex 11 consists of a very hard crosslinked rubber or the like.

In the present embodiment, the carcass 5 consists of a carcass ply 12. The carcass ply 12 extends between the opposite bead portions 4 along the inner sides of the tread portion 2 and the sidewall portions 3. The carcass ply 12 is folded around the core 10 from the inside to the outside in the axial direction of the tire. Though not shown, the carcass ply 12 consists of a large number of parallel cords and a topping rubber. The absolute value of the angle of each cord relative to the equator EQ (CL) is usually 70° to 90°. In other words, the carcass 5 has a radial structure.

In the present embodiment, the belt 6 is located radially outward of the carcass 5. The belt 6 is stacked on the carcass 5. The belt 6 reinforces the carcass 5.

The belt 6 may consist of an inner layer belt 13 and an outer layer belt 14. In the present embodiment, the widths of the belts 13 and 14 are different from each other.

Though not shown, the inner layer belt 13 and the outer layer belt 14 each usually consist of a large number of parallel cords and a topping rubber. Each cord is desirably inclined to the equator EQ. Desirably, the cords of the inner layer belt 13 are inclined in a direction opposite to that of the cords of the outer layer belt.

Though not shown, an embodiment may be used in which a band is stacked on the radially outer side of the belt 6. The width of the band is larger than that of the belt 6. The band may consist of cords and a topping rubber. The cords are spirally wound. The belt is constrained by the cords, so that the belt 6 is inhibited from lifting. The cords desirably consist of organic fibers. Preferred examples of the organic fibers include nylon fibers, polyester fibers, rayon fibers, polyethylene naphthalate fibers, and aramid fibers.

Though not shown, an embodiment may be used in which an edge band is provided radially outward of the belt 6 and near the widthwise end (edge portion) of the belt 6. Like the band, the edge band may consist of cords and a topping rubber. An exemplary edge band may be stacked on the upper surface of a step 20 of the wider inner layer belt 13. In an exemplary embodiment, the cords of the edge band are inclined in the same direction as the cords of the narrower outer layer belt 14 and are biased relative to the cords of the wider inner layer belt 13.

Though not shown, an embodiment may be used in which a cushion rubber layer is stacked on the carcass 5 near the widthwise end of the belt 6. In an exemplary embodiment, the cushion layer consists of a soft crosslinked rubber. The cushion layer absorbs the stress on the belt edge.

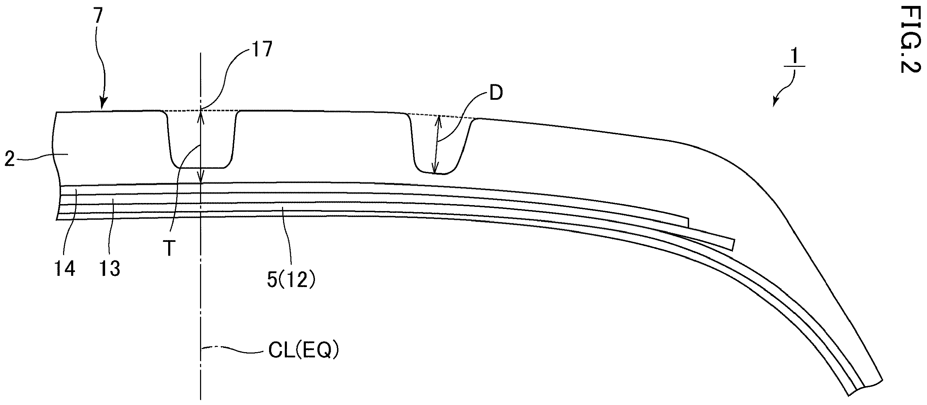

FIG. 2 shows a cross section of the tread portion 2 of the tire 1 taken along a plane including the tire axis. In FIGs. 1 and 2, a crown center 17 located at the equator EQ corresponds to "the equator in a cross section of the tread portion 2 taken in the radial direction of the tire".

The tire 1 satisfies relationship (1) with respect to the acetone-extractable content A (%) of the tread rubber composition (vulcanized rubber composition) included in the tread portion 2 and the thickness T (mm) of the tread portion 2 measured on the equator in a cross section taken in the radial direction of the tire.

In the tire 1, the thickness T of the tread portion 2 measured on the equator in a cross section taken in the radial direction of the tire refers to the distance from the tread surface 7 (which corresponds to a straight line connecting the edges of the groove 8 which are outermost in the radial direction of the tire as the tire 1 has the groove on the equator of the tire) to the interface of the outer layer belt 14, which is outermost with respect to the tire, as measured on the equator in a cross section taken along a plane including the axis of the tire.

The tread portion 2 of the tire 1 includes circumferential grooves 8, and the groove depth D of the circumferential grooves 8 refers to the distance in the normal direction from a plane extended from the tread face 7 forming the ground contact surface to the deepest groove bottom and also refers to the depth of the deepest groove among the circumferential grooves 8 provided.

Then, the tire 1 desirably satisfies each of the above-mentioned relationships with respect to the acetone-extractable content A (%) of the tread rubber composition (vulcanized rubber composition) included in the tread portion 2, the thickness T (mm) of the tread portion 2 measured on the equator in a cross section taken in the radial direction of the tire, the groove depth D (mm) of the circumferential groove provided in the tread portion 2, and the negative ratio S (%) of the tread portion 2.

EXAMPLES

Examples (working examples) which may be preferable in implementing the invention are described below, but the scope of the present invention is not limited to the examples.

The chemicals used in the synthesis and polymerization processes are listed below. Here, the chemicals are purified as needed by conventional techniques.

n-Hexane: a product of Kanto Chemical Co., Inc.
Styrene: a product of Kanto Chemical Co., Inc.
Butadiene: 1,3-butadiene available from Tokyo Chemical Industry Co., Ltd.
TMEDA: N,N,N',N'-tetramethylethylenediamine available from Kanto Chemical Co., Inc.
n-Butyllithium solution: 1.6 M solution of n-butyllithium in hexane available from Kanto Chemical Co., Inc.
Ethanol: a product of Kanto Chemical Co., Inc.
2,6-Di-tert-butyl-p-cresol: Nocrac 200 available from Ouchi Shinko Chemical Industrial Co., Ltd.

Moreover, the methods for evaluating the prepared copolymers are collectively described below.

(Measurement of degree of hydrogenation of conjugated diene portion of copolymer)

A solution having a concentration of 15% by mass is prepared using carbon tetrachloride as a solvent and is used to measure a $^1$H-NMR spectrum at 100 MHz. The degree of hydrogenation is calculated from the rate of decrease in unsaturated bond signals in the $^1$H-NMR spectrum.

(Measurement of styrene content)

A $^1$H-NMR spectrum is measured using a JEOL JNM-A 400 NMR device at 25°C. The ratio of the phenyl protons of the styrene unit at 6.5 to 7.2 ppm to the vinyl protons of the butadiene unit at 4.9 to 5.4 ppm is determined from the spectrum and used to determine the styrene content.

(Measurement of weight average molecular weight (Mw))

The weight average molecular weight (Mw) of the copolymers is determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

(Production Example 1-1: Synthesis of hydrogenated styrene-butadiene copolymer 1, degree of hydrogenation 95 mol%)

A sufficiently nitrogen-purged heat-resistant reaction vessel is charged with 2000 mL of n-hexane, 60 g of styrene, 140 g of butadiene, 0.93 g of TMEDA, and 0.45 mmol of n-butyllithium, followed by stirring at 50°C for 5 hours to perform a polymerization reaction. Then, the reaction solution is stirred for 20 minutes while supplying hydrogen gas at a pressure of 0.4 MPa gauge to react unreacted polymer terminal lithium with hydrogen into lithium hydride. Hydrogenation is performed using a titanocene dichloride-based catalyst at a hydrogen gas supply pressure of 0.7 MPa gauge and a reaction temperature of 90°C. Once the cumulative amount of absorbed hydrogen reaches the amount corresponding to the target degree of hydrogenation, the reaction temperature is brought to room temperature, and the hydrogen pressure is returned to an ordinary pressure. Then, the reaction solution is drawn from the reaction vessel and introduced into water with stirring. Then, the solvent is removed by steam stripping to obtain a hydrogenated styrene-butadiene copolymer 1.
The hydrogenated styrene-butadiene copolymer 1 has a degree of hydrogenation of 95 mol%, a weight average molecular weight (Mw) of 450,000, a styrene content of 30% by mass, and a butadiene content of 70% by mass.

(Production Example 1-2: Synthesis of hydrogenated styrene-butadiene copolymer 2, degree of hydrogenation 80 mol%)

A hydrogenated styrene-butadiene copolymer 2 is produced according to the same formulation as the hydrogenated styrene-butadiene copolymer 1, except that the cumulative amount of absorbed hydrogen is controlled to give the target degree of hydrogenation. The hydrogenated styrene-butadiene copolymer 2 has a degree of hydrogenation of 80 mol%, a weight average molecular weight (Mw) of 480,000, and a styrene content of 30% by mass.

(Production Example 2: Synthesis of liquid hydrogenated styrene-butadiene copolymer)

A sufficiently nitrogen-purged heat-resistant reaction vessel is charged with n-hexane, styrene, butadiene, TMEDA, and n-butyllithium, followed by stirring at 50°C for 5 hours to perform a polymerization reaction. Then, the reaction solution is stirred while supplying hydrogen gas at a pressure of 0.4 MPa gauge to react unreacted polymer terminal lithium with hydrogen into lithium hydride. Hydrogenation is performed using a titanocene dichloride-based catalyst at a hydrogen gas supply pressure of 0.7 MPa gauge and a reaction temperature of 90°C. Once the cumulative amount of absorbed hydrogen reaches the amount corresponding to the target degree of hydrogenation, the reaction temperature is brought to room temperature, and the hydrogen pressure is returned to an ordinary pressure. Then, the reaction solution is drawn from the reaction vessel and introduced into water with stirring. Then, the solvent is removed by steam stripping to obtain a liquid hydrogenated styrene-butadiene copolymer. The liquid hydrogenated styrene-butadiene copolymer has a degree of hydrogenation of 70 mol%, a weight average molecular weight (Mw) of 8,000, and a styrene content of 55% by mass.

Tires including compositions prepared from the following chemicals while changing the formulation as shown in each table are examined. The results calculated according to the evaluations described later are shown in the tables. Here, the chemicals are purified as needed by conventional techniques.

NR: TSR20

Hydrogenated styrene-butadiene copolymers 1 and 2: Production Examples 1-1 and 1-2 (polymers containing an ethylene unit)

SBR: JSR1502 (E-SBR, styrene content: 23.5% by mass) available from JSR Corporation

BR: UBEPOL BR150B (Mw: 440,000, high-cis BR, cis content: 96% by mass) available from Ube Industries, Ltd.

Carbon black: SHOBLACK N220 ($N_2SA$: 111 $m^2/g$) available from Cabot Japan K.K.

Silica: Ultrasil VN3 ($N_2SA$: 175 $m^2/g$, average primary particle size: 18 nm) available from Evonik Degussa

Silane coupling agent: Si266 (bis(3-triethoxysilylpropyl)disulfide) available from Evonik Degussa

Cyclic structure-containing resin component 1: SYLVARES SA85 (copolymer of $\alpha$-methylstyrene and styrene, softening point: 85°C) available from KRATON

Cyclic structure-containing resin component 2: KORESIN (p-t-butylphenol acetylene resin, p-t-butylphenol-acetylene condensation resin, softening point: 145°C, Tg: 98°C) available from BASF

Cyclic structure-containing resin component 3: ESCURON V120 (coumarone-indene resin, softening point: 120°C) available from NIPPON STEEL Chemical.

Liquid hydrogenated styrene-butadiene copolymer: Production Example 2 (a polymer containing an ethylene unit)

Oil: Vivatec 500 (TDAE, aromatic process oil) available from H&R

Zinc oxide: Ginrei R available from Toho Zinc Co., Ltd.

Antioxidant: Antigene 6C (N-(1,3-dimethylbutyl)-N'-phenyl-p-phenylenediamine) available from Sumitomo Chemical Co., Ltd.

Stearic acid: stearic acid beads TSUBAKI available from NOF Corporation

Wax: Ozoace 0355 available from Nippon Seiro Co., Ltd.

Sulfur: HK-200-5 (5% oil-containing powdered sulfur) available from Hosoi Chemical Industry Co., Ltd.

Vulcanization accelerator DPG: NOCCELER D (N,N'-diphenylguanidine) available from Ouchi Shinko Chemical Industrial Co., Ltd.

Vulcanization accelerator CZ: NOCCELER CZ-G (N-cyclohexyl-2-benzothiazolylsulfenamide) available from Ouchi Shinko Chemical Industrial Co., Ltd.

(Examples and Comparative Examples)

According to the formulation recipe shown in each table, the chemicals other than the sulfur and vulcanization accelerators are kneaded for four minutes at 160°C using a 16 L Banbury mixer (Kobe Steel, Ltd.) to give a kneaded mixture. Next, the sulfur and vulcanization accelerators are added to the kneaded mixture, and they are kneaded for four minutes at 80°C in an open roll mill to obtain an unvulcanized rubber composition. The unvulcanized rubber composition is formed into the shape of a tread and assembled with other tire components on a tire building machine to build an unvulcanized tire. The unvulcanized tire is then vulcanized at 170°C for 12 minutes to prepare a test tire (size: 195/65R15, specification: shown in each table).

The test tires prepared from the compositions whose formulation is changed as shown in each table are simulated, and the results calculated according to the below-described evaluations are shown in the tables.

Here, the standard comparative examples used are as follows:

Table 1: Comparative Example 1-7;
Table 2: Comparative Example 2-7.

<Acetone-extractable content (A)>

The amount (% by mass) of substances extracted with acetone from a rubber specimen cut out of the tread of each test tire is measured by a method for measuring the acetone-extractable content in accordance with JIS K 6229:2015.

```
Acetone-extractable content (% by mass) = [(Mass of sample
before extraction) - (Mass of sample after
extraction)]/(Mass of sample before extraction) × 100
```

<Wet grip performance during high-speed driving>

The test tires are mounted on a front-engine, rear-wheel-drive car of 2000 cc displacement made in Japan. After the specification of the mounted tires is confirmed, a driver drives the car 10 laps around a test track in wet asphalt conditions (high-speed driving: average speed of 100 km/h). Then, the driver subjectively evaluates the braking performance just before turning on a 5-point scale. A total of 20 drivers conduct the same evaluation, and the sum of the points is expressed as an index (index of wet grip performance during high-speed driving) relative to that of the standard comparative example taken as 100. A higher index indicates better wet grip performance during high-speed driving.

[Table 1]

[Table 1]

| | | Example | | | | | | | | | | | | Comparative Example | | | | | | |
|---|---|---|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-1 | 1-2 | 1-3 | 1-4 | 1-5 | 1-6 | 1-7 |
| Amount (parts by mass) | NR | 30 | 30 | 30 | 30 | 30 | 30 | 30 | 30 | 30 | 30 | 30 | 30 | 30 | 30 | 30 | 30 | 30 | 30 | 30 |
| | Hydrogenated styrene-butadiene copolymer 1 | 60 | 60 | 60 | 60 | 60 | 60 | 60 | 60 | | 60 | 60 | 60 | | 60 | 60 | | 60 | | |
| | Hydrogenated styrene-butadiene copolymer 2 | | | | | | | | | 60 | | | | | | | | | | |
| | SBR | | | | | | | | | | | | | 60 | | | 60 | | 60 | 60 |
| | BR | 10 | 10 | 10 | 10 | 10 | 10 | 10 | 10 | 10 | 10 | 10 | 10 | 10 | 10 | 10 | 10 | 10 | 10 | 10 |
| | Carbon black | 20 | 20 | 20 | 20 | 20 | 20 | 20 | 20 | 20 | 20 | 20 | 20 | 20 | 20 | 20 | 20 | 20 | 20 | 20 |
| | Silica | 75 | 75 | 75 | 85 | 85 | 75 | 85 | 85 | 85 | 85 | 85 | 85 | 75 | 75 | 75 | 75 | 75 | 75 | 85 |
| | Silane coupling agent | 0.75 | 0.75 | 0.75 | 0.85 | 0.85 | 0.75 | 0.85 | 0.85 | 0.85 | 0.85 | 0.85 | 0.85 | 0.75 | 0.75 | 0.75 | 0.75 | 0.75 | 0.75 | 0.85 |
| | Cyclic structure-containing resin component 1 | 8 | 8 | 12 | 12 | 12 | 12 | 25 | 30 | 12 | | | 20 | 8 | | 8 | 8 | | 12 | 12 |
| | Cyclic structure-containing resin component 2 | | | | | | | | | | 12 | | | | | | | | | |
| | Cyclic structure-containing resin component 3 | | | | | | | | | | | 12 | | | | | | | | |
| | Oil | 10 | 25 | 25 | 25 | 25 | 25 | 25 | 30 | 25 | 25 | 25 | 25 | 10 | 18 | 10 | 25 | 33 | 25 | 25 |
| | Zinc oxide | 2 | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator DPG | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator CZ | 2 | 2 | 2 | 2 | 2 | 2 | 2 | 2 | 2 | 2 | 2 | 2 | 2 | 2 | 2 | 2 | 2 | 2 | 2 |
| Physical properties and Evaluation | Acetone-extractable content A (% by mass) | 12.6 | 18.0 | 19.3 | 18.5 | 18.5 | 19.3 | 22.5 | 25.2 | 18.5 | 18.5 | 18.5 | 22.5 | 14.4 | 13.3 | 13.3 | 19.7 | 18.0 | 21.0 | 20.2 |
| | Thickness T (mm) | 15.0 | 15.0 | 15.0 | 15.0 | 10.0 | 7.0 | 7.0 | 7.0 | 10.0 | 10.0 | 10.0 | 7.0 | 15.0 | 15.0 | 20.0 | 15.0 | 15.0 | 15.0 | 15.0 |
| | A/T | 0.84 | 1.20 | 1.29 | 1.23 | 1.85 | 2.76 | 3.21 | 3.60 | 1.85 | 1.85 | 1.85 | 3.21 | 0.96 | 0.89 | 0.67 | 1.31 | 1.20 | 1.40 | 1.35 |
| | Groove depth D (mm) | 10.0 | 10.0 | 10.0 | 10.0 | 7.0 | 5.0 | 5.0 | 5.0 | 7.0 | 7.0 | 7.0 | 5.0 | 13.0 | 13.0 | 18.0 | 13.0 | 13.0 | 13.0 | 13.0 |
| | Negative ratio S (%) | 32 | 32 | 32 | 32 | 32 | 32 | 32 | 32 | 32 | 32 | 32 | 25 | 32 | 32 | 32 | 32 | 32 | 32 | 32 |
| | (A/T) × D | 8.4 | 12.0 | 12.9 | 12.3 | 13.0 | 13.8 | 16.1 | 18.0 | 13.0 | 13.0 | 13.0 | 16.1 | 12.5 | 11.5 | 12.0 | 17.1 | 15.6 | 18.2 | 17.5 |
| | (A/T)/S × 100 | 2.6 | 3.8 | 4.0 | 3.9 | 5.8 | 8.6 | 10.0 | 11.3 | 5.8 | 5.8 | 5.8 | 12.9 | 3.0 | 2.8 | 2.1 | 4.1 | 3.8 | 4.4 | 4.2 |
| | Wet grip performance during high-speed driving | 106 | 108 | 114 | 118 | 126 | 128 | 130 | 128 | 122 | 120 | 124 | 134 | 90 | 88 | 98 | 90 | 88 | 98 | 100 |

21

[Table 2]

| | | Example | | | | | | | | | | | | | | Comparative Example | | | | | | |
|---|---|---|---|---|---|---|---|---|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-11 | 2-12 | 2-13 | 2-1 | 2-2 | 2-3 | 2-4 | 2-5 | 2-6 | 2-7 |
| Amount (parts by mass) | NR | 30 | 30 | 30 | 30 | 30 | 30 | 30 | 30 | 30 | 30 | 30 | 30 | 30 | 30 | 30 | 30 | 30 | 30 | 30 | 30 |
| | SBR | 60 | 60 | 60 | 60 | 60 | 60 | 60 | 60 | 60 | 60 | 60 | 60 | 60 | 60 | 60 | 60 | 60 | 60 | 60 | 60 |
| | BR | 10 | 10 | 10 | 10 | 10 | 10 | 10 | 10 | 10 | 10 | 10 | 10 | 10 | 10 | 10 | 10 | 10 | 10 | 10 | 10 |
| | Carbon black | 20 | 20 | 20 | 20 | 20 | 20 | 20 | 20 | 20 | 20 | 20 | 20 | 20 | 20 | 20 | 20 | 20 | 20 | 20 | 20 |
| | Silica | 75 | 75 | 75 | 85 | 85 | 75 | 85 | 85 | 85 | 85 | 85 | 85 | 85 | 75 | 75 | 75 | 75 | 75 | 75 | 85 |
| | Silane coupling agent | 0.75 | 0.75 | 0.75 | 0.85 | 0.85 | 0.75 | 0.85 | 0.85 | 0.85 | 0.85 | 0.85 | 0.85 | 0.85 | 0.75 | 0.75 | 0.75 | 0.75 | 0.75 | 0.75 | 0.85 |
| | Cyclic structure-containing resin component 1 | 8 | 8 | 12 | 12 | 12 | 12 | 18 | 23 | 12 | 12 | | | 20 | | 8 | | | 8 | 12 | 12 |
| | Cyclic structure-containing resin component 2 | | | | | | | | | | | 12 | | | | | | | | | |
| | Cyclic structure-containing resin component 3 | | | | | | | | | | | | 12 | | | | | | | | |
| | Liquid hydrogenated styrene-butadiene copolymer | 8 | 8 | 8 | 8 | 8 | 8 | 8 | 8 | 16 | 24 | 8 | 8 | 8 | | | 8 | | | | |
| | Oil | 10 | 25 | 25 | 25 | 25 | 15 | 20 | 25 | 25 | 25 | 25 | 25 | 25 | 18 | 10 | 10 | 18 | 25 | 25 | 25 |
| | Zinc oxide | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator DPG | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator CZ | 2 | 2 | 2 | 2 | 2 | 2 | 2 | 2 | 2 | 2 | 2 | 2 | 2 | 2 | 2 | 2 | 2 | 2 | 2 | 2 |
| Physical properties and Evaluation | Acetone-extractable content A (% by mass) | 16.6 | 21.6 | 22.9 | 22.0 | 22.0 | 19.7 | 22.3 | 25.1 | 23.7 | 25.3 | 22.0 | 22.0 | 22.3 | 14.4 | 14.4 | 14.4 | 14.4 | 19.7 | 21.0 | 20.2 |
| | Thickness T (mm) | 15.0 | 15.0 | 15.0 | 15.0 | 10.0 | 7.0 | 7.0 | 7.0 | 10.0 | 10.0 | 10.0 | 10.0 | 7.0 | 20.0 | 20.0 | 20.0 | 15.0 | 15.0 | 15.0 | 15.0 |
| | A/T | 1.11 | 1.44 | 1.53 | 1.47 | 2.20 | 2.81 | 3.19 | 3.59 | 2.37 | 2.53 | 2.20 | 2.20 | 3.19 | 0.72 | 0.72 | 0.72 | 0.96 | 1.31 | 1.40 | 1.35 |
| | Groove depth D (mm) | 10.0 | 10.0 | 10.0 | 10.0 | 7.0 | 5.0 | 5.0 | 5.0 | 7.0 | 7.0 | 7.0 | 7.0 | 5.0 | 13.0 | 13.0 | 13.0 | 13.0 | 13.0 | 13.0 | 13.0 |
| | Negative ratio S (%) | 32.0 | 32.0 | 32.0 | 32.0 | 32.0 | 32.0 | 32.0 | 32.0 | 32.0 | 32.0 | 32.0 | 32.0 | 25.0 | 32.0 | 32.0 | 32.0 | 32.0 | 32.0 | 32.0 | 32.0 |
| | (A/T) × D | 11.1 | 14.4 | 15.3 | 14.7 | 15.4 | 14.1 | 15.9 | 17.9 | 16.6 | 17.7 | 15.4 | 15.4 | 15.9 | 9.4 | 9.4 | 9.4 | 12.5 | 17.1 | 18.2 | 17.5 |
| | (A/T)/S × 100 | 3.5 | 4.5 | 4.8 | 4.6 | 6.9 | 8.8 | 10.0 | 11.2 | 7.4 | 7.9 | 6.9 | 6.9 | 12.7 | 2.3 | 2.3 | 2.3 | 3.0 | 4.1 | 4.4 | 4.2 |
| | Wet grip performance during high-speed driving | 104 | 106 | 112 | 115 | 122 | 124 | 128 | 120 | 126 | 128 | 118 | 120 | 130 | 84 | 88 | 82 | 86 | 90 | 98 | 100 |

Exemplary embodiments of the present invention include:

Embodiment 1. A tire, including a tread portion including a rubber composition,

the rubber composition containing at least one polymer containing an ethylene unit and at least one resin component containing a cyclic structure,
the tire satisfying the following relationship (1):

$$A/T \geq 0.80,$$

wherein A represents an acetone-extractable content (%) of the rubber composition, and T represents a thickness (mm) of the tread portion measured on an equator in a cross section taken in a radial direction of the tire.

Embodiment 2. The tire according to Embodiment 1, wherein the tire satisfies the following relationship:

A ≥ 15.0% by mass,
wherein A represents the acetone-extractable content (%) of the rubber composition.

Embodiment 3. The tire according to Embodiment 1 or 2,
wherein an amount of the resin component containing a cyclic structure per 100 parts by mass of a rubber component content in the rubber composition is 10 parts by mass or more.
Embodiment 4. The tire according to any one of Embodiments 1 to 3,
wherein an amount of silica per 100 parts by mass of a rubber component content in the rubber composition is 80 parts by mass or more.
Embodiment 5. The tire according to any one of Embodiments 1 to 4,
wherein the tire satisfies the following relationship:

$$T \leq 12.0 \text{ mm},$$

wherein T represents the thickness (mm) of the tread portion measured on an equator in a cross section taken in a radial direction of the tire.
Embodiment 6. The tire according to any one of Embodiments 1 to 5,
wherein the tread portion is provided with a circumferential groove having a groove depth D of 5.0 mm or more.
Embodiment 7. The tire according to any one of Embodiments 1 to 6,
wherein the tread portion has a negative ratio S of 35% or lower.
Embodiment 8. The tire according to any one of Embodiments 1 to 7,
wherein the tire satisfies the following relationship:

$$(A/T) \times D \geq 10.0,$$

wherein A represents the acetone-extractable content (%) of the rubber composition, T represents the thickness (mm) of the tread portion measured on an equator in a cross section taken in a radial direction of the tire, and D represents a groove depth (mm) of a circumferential groove provided in the tread portion.
Embodiment 9. The tire according to any one of Embodiments 1 to 8,
wherein the tire satisfies the following relationship:

$$(A/T)/S \times 100 \geq 3.0,$$

wherein A represents the acetone-extractable content (%) of the rubber composition, T represents the thickness (mm) of the tread portion measured on an equator in a cross section taken in a radial direction of the tire, and S represents a negative ratio (%) of the tread portion.

REFERENCE SIGNS LIST

1 tire
2 tread portion
3 sidewall portion
4 bead portion
5 carcass
6 belt
7 tread face
8 groove
10 core
11 apex
12 carcass ply
13 inner layer belt
14 outer layer belt
15 shoulder portion
17 crown center (tread center line CL, equator EQ of tire 1)
20 step
D groove depth of circumferential groove
T thickness of tread portion measured on equator in cross section taken in radial direction of tire

Provided is a tire having excellent wet grip performance during high-speed driving. The present invention relates to a tire which includes a tread portion including a rubber composition, the rubber composition containing a polymer containing an ethylene unit and a resin component containing a cyclic structure, the tire satisfying the following relationship (1): A/T ≥ 0.80, wherein A represents the acetone-extractable content (%) of the rubber composition, and T represents the thickness (mm) of the tread portion measured on the equator in a cross section taken in the radial direction of the tire.

**Claims**

1.  A tire, comprising a tread portion comprising a rubber composition,

    the rubber composition containing at least one polymer containing an ethylene unit and at least one resin component containing a cyclic structure,
    the tire satisfying the following relationship (1):

    $$A/T \geq 0.80,$$

    wherein A represents an acetone-extractable content (%) of the rubber composition, and T represents a thickness (mm) of the tread portion measured on an equator in a cross section taken in a radial direction of the tire.

2.  The tire according to claim 1,
    wherein the tire satisfies the following relationship:

    $$A \geq 15.0\% \text{ by mass,}$$

    wherein A represents the acetone-extractable content (%) of the rubber composition.

3.  The tire according to claim 1 or 2,
    wherein an amount of the resin component containing a cyclic structure per 100 parts by mass of a rubber component content in the rubber composition is 10 parts by mass or more.

4.  The tire according to any one of claims 1 to 3,
    wherein an amount of silica per 100 parts by mass of a rubber component content in the rubber composition is 80 parts by mass or more.

5.  The tire according to any one of claims 1 to 4,
    wherein the tire satisfies the following relationship:

$$T \leq 12.0 \text{ mm,}$$

wherein T represents the thickness (mm) of the tread portion measured on an equator in a cross section taken in a radial direction of the tire.

6. The tire according to any one of claims 1 to 5,
   wherein the tread portion is provided with a circumferential groove having a groove depth D of 5.0 mm or more.

7. The tire according to any one of claims 1 to 6,
   wherein the tread portion has a negative ratio S of 35% or lower.

8. The tire according to any one of claims 1 to 7,
   wherein the tire satisfies the following relationship:

$$(A/T) \times D \geq 10.0,$$

wherein A represents the acetone-extractable content (%) of the rubber composition, T represents the thickness (mm) of the tread portion measured on an equator in a cross section taken in a radial direction of the tire, and D represents a groove depth (mm) of a circumferential groove provided in the tread portion.

9. The tire according to any one of claims 1 to 8,
   wherein the tire satisfies the following relationship:

$$(A/T)/S \times 100 \geq 3.0,$$

wherein A represents the acetone-extractable content (%) of the rubber composition, T represents the thickness (mm) of the tread portion measured on an equator in a cross section taken in a radial direction of the tire, and S represents a negative ratio (%) of the tread portion.

## FIG.1

FIG.2

Europäisches
Patentamt

European
Patent Office

Office européen
des brevets

# EUROPEAN SEARCH REPORT

Application Number

EP 23 15 2832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/079564 A1 (SUMITOMO RUBBER IND [JP]) 29 April 2021 (2021-04-29) * figures 1-2 * * examples * * paragraph [0126] * | 1-9 | INV. B60C1/00 C08L15/00 |
| A | EP 3 950 381 A1 (SUMITOMO RUBBER IND [JP]) 9 February 2022 (2022-02-09) * tables 4,5 * | 1-9 | |
| A | US 2019/010313 A1 (YAMASHIRO YUHEI [JP] ET AL) 10 January 2019 (2019-01-10) * claims; examples * | 1-9 | |

TECHNICAL FIELDS
SEARCHED     (IPC)

B60C
C08L
C08C

The present search report has been drawn up for all claims

| Place of search | Date of completion of the search | Examiner |
|---|---|---|
| Munich | 12 July 2023 | Baekelmans, Didier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

EP 4 230 438 A1

## ANNEX TO THE EUROPEAN SEARCH REPORT
## ON EUROPEAN PATENT APPLICATION NO.

EP 23 15 2832

This annex lists the patent family members relating to the patent documents cited in the above-mentioned European search report.
The members are as contained in the European Patent Office EDP file on
The European Patent Office is in no way liable for these particulars which are merely given for the purpose of information.

12−07−2023

| Patent document cited in search report | | Publication date | Patent family member(s) | | Publication date |
|---|---|---|---|---|---|
| WO 2021079564 | A1 | 29−04−2021 | CN | 113993941 A | 28−01−2022 |
| | | | EP | 4046819 A1 | 24−08−2022 |
| | | | JP | 2022048243 A | 25−03−2022 |
| | | | JP | WO2021079564 A1 | 18−11−2021 |
| | | | US | 2022389206 A1 | 08−12−2022 |
| | | | WO | 2021079564 A1 | 29−04−2021 |
| EP 3950381 | A1 | 09−02−2022 | CN | 114056010 A | 18−02−2022 |
| | | | EP | 3950381 A1 | 09−02−2022 |
| US 2019010313 | A1 | 10−01−2019 | CN | 109206691 A | 15−01−2019 |
| | | | EP | 3424750 A1 | 09−01−2019 |
| | | | JP | 6953841 B2 | 27−10−2021 |
| | | | JP | 2019014796 A | 31−01−2019 |
| | | | US | 2019010313 A1 | 10−01−2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016039005 A
- US 4414370 A
- JP S596207 A
- JP H558005 B
- JP H1313522 A
- US 5010166 A

**Non-patent literature cited in the description**

- TREND. Toagosei Co., Ltd, 2000, vol. 3, 42-45